# EUROPEAN PATENT APPLICATION

(11) **EP 3 287 975 A1**
(43) Date of publication of application: **28.02.2018**
(21) Application number: 17179900.0
(22) Date of filing: 06.07.2017
(51) Int. Cl.: G06Q 30/02

(54) **ADVERTISEMENT IMAGE GENERATION SYSTEM AND ADVERTISEMENT IMAGE GENERATING METHOD THEREOF**

(30) Priority: 23.08.2016 TW 105126871
(71) Applicant: Pegatron Corporation, Taipei City 112 (TW)
(72) Inventor: FENG, Chen-Yu, Taipei City 112 (TW); LEE, Che-Ming, Taipei City 112 (TW); HUANG, Hsing-Wei, Taipei City 112 (TW)
(74) Representative: Altenburg, Bernardus Stephanus Franciscus

(57) **Abstract**

An advertisement image generation system and an advertisement image generating method thereof are disclosed. The advertisement image generation system stored an original advertisement image includes an image display device, an image capturing device, an image selection module and a synthesis module. The image capturing device is used to capture a capturing image of a scene, wherein the capturing image has an object. The image selection module is used to find a corresponding selected area image which is having the object from the capturing image. The synthesis module is used for combining the selected area image and the original advertisement image into a final advertisement image, thus the image display device is able to display the final advertisement image.

## Description

### BACKGROUND

### 1. Technology Field

The present disclosure relates to an advertisement image generation system and an advertisement image generating method thereof, particularly to an advertisement image generation system and an advertisement image generating method thereof capable of increasing interactions.

### 2. Description of the Related Art

With the advancement of science and technology, advertising has evolved from print advertising to dynamic interactive advertising. Just like a usual signage, the advertising machine has evolved from simple planar image display to digital touch-based interactive display, or even to other displays such as gestures or posture to interact with users who watched the advertisement. The evolution of the above-mentioned advertising machine even brought into the naked eye 3D display screen technology, but it still lacks ways of further interacting with the target user groups, and may have lost some potential advertising audience for being unable to receive advertising information.

Accordingly, it is necessary to devise a new advertisement image generation system and an advertisement image generating method thereof to solve the problem in the prior art.

### Summary

It is a major objective of the present disclosure to provide an advertisement image generation system having an effect of increasing interactions.

It is another objective of the present disclosure to provide an advertisement image generating method used for the system described above.

To achieve the above objectives, the advertisement image generation system in the present disclosure that stores an original advertisement image includes an image display device, an image capturing device, an image selection module, and a synthesis module. The image capturing device is used to capture a capturing image of a scene. The capturing image has an object. The image selection module is electrically connected to the image capturing device for finding a selected area image having the object from the capturing image. The synthesis module is electrically connected to the image selection module for combining the selected area image and the original advertisement image into a final advertisement image, such that the image display device is able to display the final advertisement image.

An advertisement image generating method according the present disclosure includes the following steps: capturing a capturing image of a scene, wherein the capturing image has an object; finding a selected area image having the object from the capturing image; combining the selected area image and the original advertisement image into a final advertisement image; and displaying the final advertisement image.

### BRIEF DESCRIPTION OF THE DRAWINGS

FIG. 1 is an architecture diagram of an advertisement image generation system in the present invention;
FIG. 1A shows the appearance of the advertisement image generation system in the present invention;
FIG. 2 is a view showing an original advertisement image in the present invention;
FIGS. 3A-3C are views showing fining a selected area image according to a first embodiment of the present invention;
FIG. 4A is a view showing a final advertisement image according to the first embodiment of the present invention;
FIG. 4B is a view showing a final advertisement image according to a second embodiment of the present invention;
FIG. 5 is a flowchart showing steps of a video image generation method according to the first embodiment of the present invention; and
FIG. 6 is a flowchart showing steps of a video image generation method according to the second embodiment of the present invention.

### DETAILED DESCRIPTION OF THE PREFERRED EMBODIMENT

Hereafter, the technical content of the present invention will be better understood with reference to preferred embodiments.

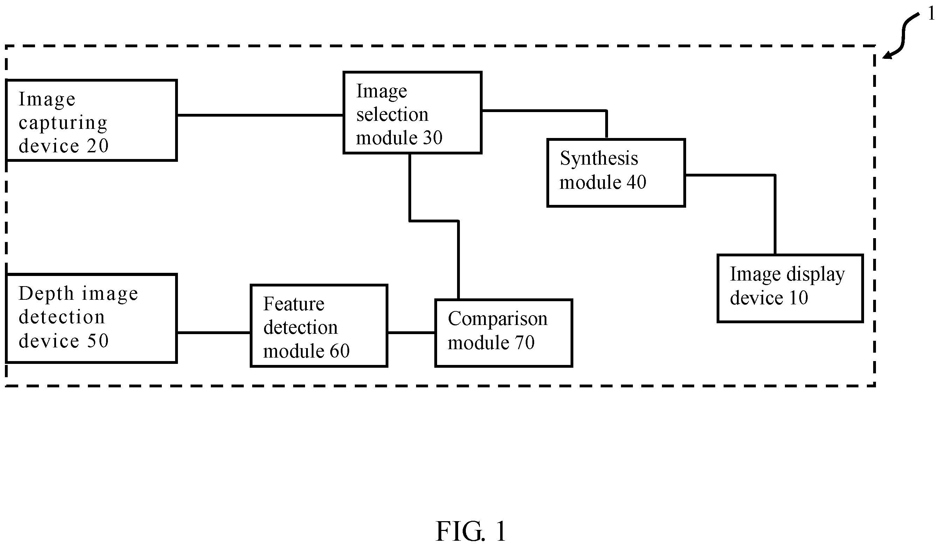

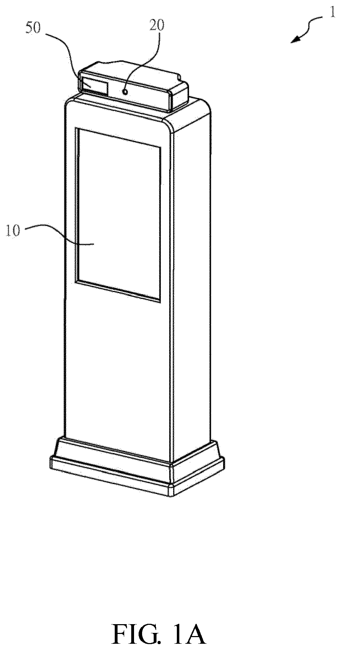

Please first refer to FIG. 1, which is an architecture diagram of an advertisement image generation system in the present invention, and then refer to FIG. 1A which shows the appearance of the advertisement image generation system in the present invention.

The advertisement image generation system 1 in the present invention that stores an original advertisement image can be used to provide advertisement to the user, and can interact with the user. The advertisement image generation system 1 may include an image display device 10, an image capturing device 20, an image selection module 30, a synthesis module 40, a depth image detection device 50, a feature detection module 60, and a comparison module 70, but the present invention is not limited to the above modules. The advertisement image generation system 1 is not limited to including all of the above modules to achieve the effect of the present invention. The appearance of the advertisement image generation system 1 is as FIG. 1A. The image capturing device 20 and the depth image detection device 50 are arranged in parallel to capture in the same direction. The image display device 10 is used to display an original advertisement image, i.e. an original advertising content that an advertising provider provides to the user. The original advertisement image may be a planar image. The image display device 10 may be a naked eye three-dimensional display module to show the three-dimensional original advertisement image, but the present invention does not limit the format displayed by the image display device 10.

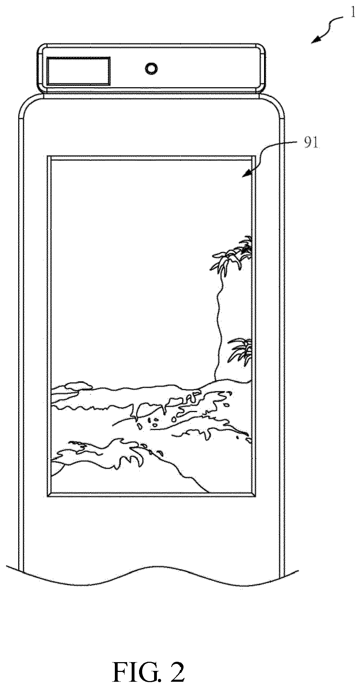

Please refer to FIG. 2, which shows an original advertisement image in the present invention.

Firstly, the image display device 10 displays an original advertisement image 91. The original advertisement image 91 may be a still image or a motion image, but the present invention is not limited thereto. The original advertisement image 91 as shown in FIG. 2 is a tourist scene, but may also be clothing, ornaments, furniture, or transportation images in other embodiments.

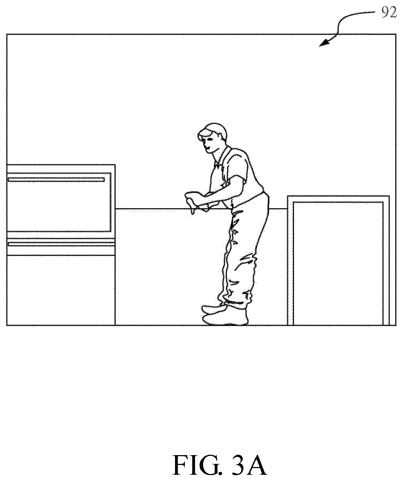

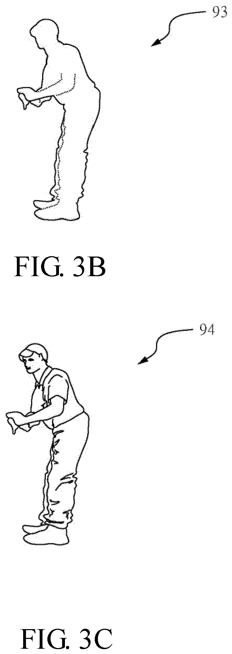

Then, please refer to FIGS. 3A-3C, which show the selected area image found according to the first embodiment of the present invention.

The image capturing device 20 is used to capture a capturing image 92 of a scene, as shown in FIG. 3A. The capturing image 92 includes an object which may be a human body or a physical body, but the present invention is not limited thereto. In the first embodiment of the present invention, the capturing image 92 may include the human body image of the first user. The image selection module 30 may be configured as hardware device, software program in combination with hardware device, or firmware in combination with hardware device. The image selection module 30 is electrically connected to the image capturing device 20 for finding a selected area image 94 having the object from the capturing image, e.g. finding the object through color matching, but the present invention is not limited thereto. In an embodiment of the present invention, the advertisement image generation system 1 may include a depth image detection device 50 for detecting and acquiring a human body depth image information of the user. The depth image detection device 50 may be a dual Camera, or using technology such as structured lighting scan or time-of-flight scan to obtain the depth image information 93 with different kinds of performances, as shown in FIG. 3B, but the present invention is not limited to the technology listed above. Also, in an embodiment of the present invention, the advertisement image generation system 1 may include a feature detection module 60 which is electrically connected to the depth image detection device 50. The feature detection module 60 is used to acquire a face image information or a body image information of the user from the depth image information 93, such that the image selection module 40 compares the capturing image 92 according to the face image information or the body image information to acquire the corresponding selected area image 94. Therefore, after the image capturing device 20 captures the capturing image 92 having human body images, the depth image detection device 50 and the feature detection module 60 are used to detect and acquire the depth image information 93 of the user. Finally, the image selection module 30 finds a corresponding selected area image 94 from the capturing image 92 according to the depth image information 93.

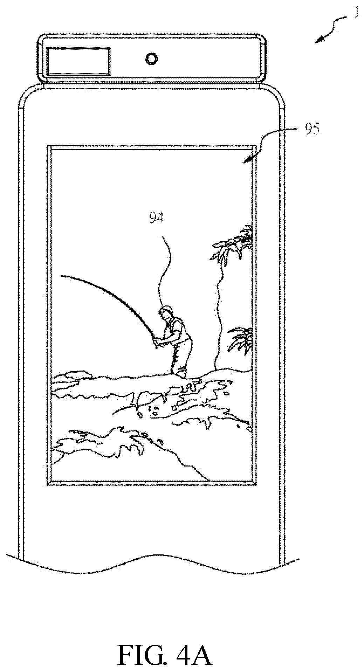

Then, please refer to FIG. 4A, which shows a final advertisement image according to a first embodiment of the present invention.

Finally, the synthesis module 40, which may be configured as hardware device, software program in combination with hardware device, or firmware in combination with hardware device, is electrically connected to the image selection module 30 for combining the selected area image 94 and the original advertisement image 91 into a final advertisement image 95. The synthesis module 40 can also insert additional accessories to the selected area image 94. For example, in FIG. 4A, the synthesis module 40 adds a fishing rod to the image of the first user. Thus, the image display device 10 can display the processed final advertisement image 95.

In addition, the original advertisement image 91 may be a three-dimensional image, and the synthesis module 40 may construct a three-dimensional final advertisement image 95 in different embodiments. For example, in an embodiment of the present invention, the advertiser may provide an original advertisement image 91 with a planar image and a depth map image, whereby the synthesis module 40 combines the selected area image 94 with the depth map image in conjunction with the planar image to form a three-dimensional final advertisement image 95. In addition, if the advertiser only provides a planar image, the synthesis module 40 can also use a technology that directly generates the selected area image 94 as the depth map image in combination with the planar image provided by the advertiser to form the three-dimensional final advertisement image 95 as well. The technology of making a three - dimensional image using the depth map image has been widely used by those skilled in the art with ordinary knowledge in the present invention, and thus its principle will not be described in detail herein.

It should be noted that to ensure that the depth image information 93 obtained by the depth image detection device 50 is really the information of people who want to watch the advertisement, the advertisement image generation system 1 may include a comparison module 70. The comparison module 70 is electrically connected to the feature detection module 60 for further determining whether the face image information or the body image information is still at a specific distance and exceeds a specific time. In an embodiment, the specific distance may be 3 meters, and the specific time may be 2 seconds, but the present invention is not limited thereto; if yes, the image selection module 40 obtains the corresponding selected area image 94 according to the face image information or the body image information to exclude passers who pass by in front of advertisement image generation system 1. Moreover, the comparison module 70 can also determine whether the face image information or the body image information exceeds a specific height (e.g. 150 cm) to exclude unsuitable users, such as underage children.

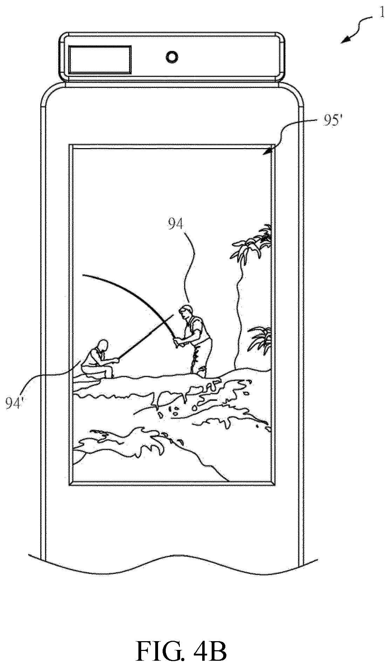

Please then refer to FIG. 4B which shows a final advertisement image according to a second embodiment of the present invention.

The advertisement image generation system 1 in the present invention is not limited to only applicable to a single user. If the depth image detection device 50 detects the depth image information of a second user, the comparison module 70 also determines whether the depth image information of the second user is at a specific distance and exceeds a specific time, that is, determining whether the second user is at a specific distance and exceeds a specific time by the face image information or the body image information of the second user detected by the feature detection module 60. The comparison module 70 further compares the face image information or the body image information of the second user according to the new depth image information to acquire a new selected area image 94'. Finally, the synthesis module 40 combines the selected area image 94 of the first user and the new selected area image 94' of the second user and the background image into the final advertisement image 95'. As described above, the advertisement image generation system 1 in the present invention is not limited to applicable to a single user, but may be applicable to two or more users.

In addition to the above-mentioned number of users, the comparison module 70 can also detect the sex, age, height, expression, posture of the user, such as hand, foot, shoulder, and head. Accordingly, the synthesis module 40 can generate a presentation of different final advertisement image contents, and select and play the specific image content, but the present invention is not limited to the above application.

It should be noted that each module in the advertisement image generation system 1 may be configured as hardware device, software program in combination of hardware device, or firmware in combination of hardware device, e.g. an application stored in a computer-readable medium, and each module may be provided in the same device or may be a different device. For example, the image capturing device 20 and the depth image detection device 50 can be configured in the same capture device, while the other modules are configured in the computer system, but the present invention is not limited to the way described above. In addition, the preferred embodiments of the present invention are only illustrative. To avoid redundancy, all the possible combinations of changes are not documented in detail. However, it shall be understood by those skilled in the art that each of the modules or elements described above may not be necessary. For the implementation of the present invention, the present invention may also contain other detailed, conventional modules or elements. Each module or component is likely to be omitted or modified depending on the needs. Other modules or elements may not necessarily exist between two of any modules.

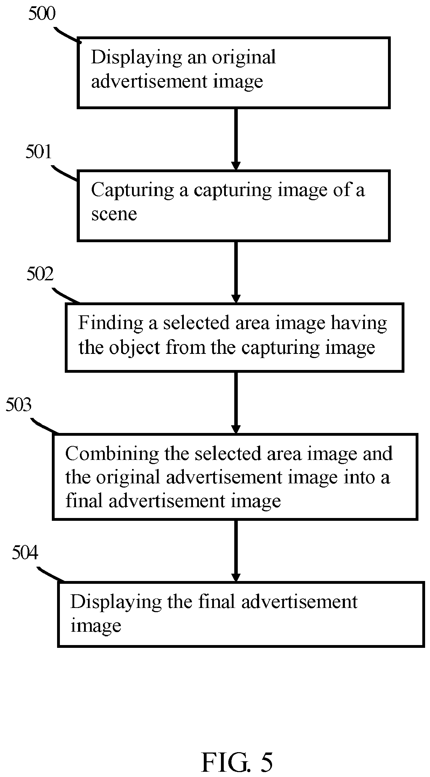

Then, please refer to FIG. 5, which is a flowchart showing steps of an advertisement image generating method according to the first embodiment of the present invention. It should be noted here that although the aforementioned advertisement image generation system 1 is used as example to illustrate the video image generation method of the present invention, the advertisement image generating method of the present invention is not limited to the use of the advertisement image generation system 1 using the same structure described above.

Firstly, in Step 500: displaying an original advertisement image.

Firstly, the image display device 10 displays an original advertisement image 91 which may be a still image or a motion image.

Then, in Step 501: capturing a capturing image of a scene.

The image capturing device 20 is then used to capture a scene to acquire a capturing image 92 having an object, wherein the object may be a human body or a physical body, but the present invention is not limited thereto.

Next, in Step 502: finding a selected area image having the object from the capturing image.

The image selection module 40 is used to find a selected area image 94 having the object from the capturing image 92, such as using color matching to find the object, but the present invention is not limited thereto.

Then, in Step 503: combining the selected area image and the original advertisement image into a final advertisement image.

The synthesis module 40 then combines the selected area image 94 and the original advertisement image 91 into a final advertisement image 95. When the final advertisement image 95 is a three-dimensional image, the synthesis module 40 combines the selected area image 94 with the depth map image provided by the advertiser, and then processes the planar image provided by the advertiser to form a three-dimensional final advertisement image 95. In addition, if the advertiser only provides a planar image, the synthesis module 40 can also use a technology that directly generates the selected area image 94 as the depth map image and combines the planar image provided by the advertiser to acquire the three-dimensional final advertisement image 95 as well.

Finally, in Step 504: displaying the final advertisement image.

After the above steps, the image display device 10 can display the final advertisement image 95.

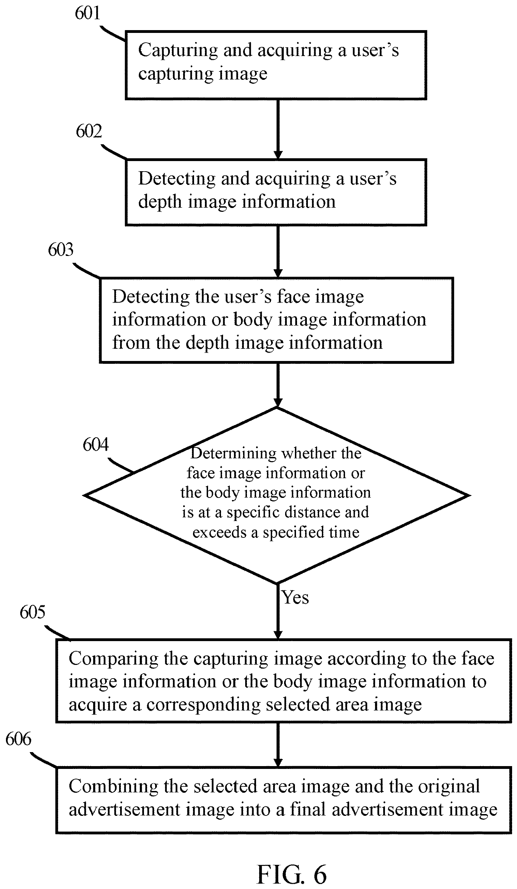

The aforementioned "object" can be the user who watches the advertisement. Therefore, in the present invention, there may be a second embodiment after Step 500 to achieve better processing results. Then, please refer to FIG. 6, which is a flowchart showing steps of a video image generation method according to the second embodiment of the present invention.

Firstly, in Step 601: capturing and acquiring a capturing image of the user.

The image capturing device 20 captures a scene to acquire a capturing image. The original advertisement image includes an object. In an embodiment of the present invention, the image capturing device 20 captures and acquires the capturing image of the user. The capturing image will include the image of the user and the background image behind it.

Next, if the advertisement image generation system 1 is to capture an image the user, in Step 602: detecting and acquiring a depth image information of the user.

The depth image detection device 50 detects the depth image information of the user.

Then, in Step 603: detecting the face image information or body image information of the user from the depth image information.

The feature detection module 60 is then used to detect a face image information or body image information the user from the depth image information.

Next, in Step 604: determining whether the face image information or the body image information is at a specific distance and exceeds a specified time.

The comparison module 70 further determines whether the face image information or the body image information is at a specific distance and exceeds a specified time. Besides, the comparison module 70 can also determine whether the face image information or the body image information exceeds a specific height, but the present invention is not limited thereto.

If yes, then proceed to Step 605: comparing the capturing image according to the face image information or the body image information to acquire a corresponding selected area image.

The image selection module 40 compares the capturing image 92 according to the face image information or the body image information to acquire the corresponding selected area image 94. It should be noted that the advertisement image generation system 1 in the present invention is not limited to only applicable to a single user, but may be applicable to two or more users. That is, in Step 601 to Step 605, the comparison module 70 can also determine whether there are two or more than two users' face image information or body image information.

Then, in Step 606: combining the selected area image and the original advertisement image into a final advertisement image.

Same as Step 503, the synthesis module 40 then combines the selected area image 94 and the original advertisement image 91 into a final advertisement image 95. If there is a second user, the synthesis module 40 may also combine the new selected area image 94' and the original advertisement image 91 into a final advertisement image 95'.

It should be noted here that the advertisement image generating method in the present invention is not limited to the order of the above steps, and the order of the above steps can be changed as long as the purpose of the present invention is achieved.

Through the advertisement image generation system 1 and the advertisement image generating method in the present invention, users can interact effectively with the advertisement content to effectively increase the performance of the advertisement.

It should be noted that the preferred embodiments of the present invention described above are only illustrative. To avoid redundancy, all the possible combinations of changes are not documented in detail. However, it shall be understood by those skilled in the art that each of the modules or elements described above may not be necessary. For the implementation of the present invention, the present invention may also contain other detailed, conventional modules or elements. Each module or component is likely to be omitted or modified depending on the needs. Other modules or elements may not necessarily exist between two of any modules. All without departing from the scope of the invention are defined solely by the appended claims.

## Claims

1. An advertisement image generation system (1), storing an original advertisement image (91), comprising:
an image capturing device (20), for capturing a capturing image (92) of a scene, wherein the capturing image has an object;
an image selection module, electrically connected to the image capturing device (20) for finding a selected area image (94) having the object from the capturing image (92);
a synthesis module (40), electrically connected to the image selection module (30) for combining the selected area image (94) and the original advertisement image (91) into a final advertisement image (95); and
an image display device (10), electrically connected to the synthesis module (40) for displaying the final advertisement image (95).

2. The advertisement image generation system (1) as claimed in claim 1, further comprising a depth image detection device (50) used for obtaining a depth image information (93) of the scene, such that the image selection module (30) finds the selected area image (94) having the object from the capturing image (92) according to the depth image information (93).

3. The advertisement image generation system (1) as claimed in claim 2, further comprising a feature detection module (60) electrically connected to the depth image detection device (50) for detecting a face image information or a body image information of the first user from the depth image information (93), such that the image selection module (30) compares the capturing image (92) according to the face image information or the body image information to acquire the corresponding selected area image (94).

4. The advertisement image generation system (1) as claimed in claim 3, further comprising a comparison module (70) electrically connected to the feature detection module (60), the comparison module (70) further determining whether the face image information or the body image information is still at a specific distance and exceeds a specific time; if yes, the image selection module (30) acquires the corresponding selected area image (94) according to the face image information or the body image information.

5. The advertisement image generation system (1) as claimed in claim 4, wherein if the depth image detection device (50) detects a new depth image information (93) of a second user, the comparison module (70) determines whether the new depth image information (93) of the second user is still at a specific distance and exceeds a specific time; if yes, the comparison module (70) further acquires a new selected area image (94') according to the new depth image information (93) of the second user.

6. The advertisement image generation system (1) as claimed in claim 4 or 5, wherein the comparison module (70) further determines whether the face image information or the body image information exceeds a specific height; if yes, the image selection module (30) acquires the corresponding selected area image (94) according to the face image information or the body image information.

7. The advertisement image generation system (1) as claimed in one of claims 1 to 6, wherein the original advertisement image (91) is a planar image, and the synthesis module (40) produces the selected area image (94) as a depth map image, and then combines the planar image into a final three-dimensional advertisement image.

8. The advertisement image generation system (1) as claimed in one of claims 1 to 7, wherein the original advertisement image (91) comprises a planar image and a depth map image, and the synthesis module (40) combines the selected area image (94) and the depth map image, then the planar image to form a three-dimensional final advertisement image (95).

9. The advertisement image generation system (1) as claimed in one of claims 1 to 8, wherein the image display device (10) is a naked three-dimensional display module.

10. An advertisement image generating method, used for an advertisement image generation system (1) that stores an original advertisement image (91); the method comprising:
capturing a capturing image (92) of a scene, wherein the capturing image (92) has an object;
finding a selected area image (94) having the object from the capturing image (92);
combining the selected area image (94) and the original advertisement image (91) into a final advertisement image (95); and
displaying the final advertisement image (95).

11. The advertisement image generating method as claimed in claim 10, further comprising the following step:
obtaining depth image information (93) of the scene to find the selected area image (94) having the object from the capturing image (92) according to the depth image information (93).

12. The advertisement image generating method as claimed in claim 11, further comprising the following steps:
detecting a face image information or a body image information of a first user from the depth image information (93); and
comparing the capturing image (92) according to the face image information or the body image information to acquire the corresponding selected area image (94).

13. The advertisement image generating method as claimed in claim 12, further comprising the following steps:
further determining whether the face image information or the body image information is still at a specific distance and exceeds a specific time; and
if yes, acquiring the corresponding selected area image (94) according to the face image information or the body image information.

14. The advertisement image generating method as claimed in claim 13, further comprising the following step:
if a second user is detected and a new depth image information (93) is exceeded for a specific time, determining whether the new depth image information (93) of the second user is at the specific distance and exceeds the specific time; and
if yes, further obtaining a new selected area image (94') according to the new depth image information (93) of the second user.

15. The advertisement image generating method as claimed in claim 13 or 14, further comprising the following steps:
further determining whether the face image information or the body image information exceeds a specific height; and
if yes, acquiring the corresponding selected area image (94) according to the face image information or the body image information.

16. The advertisement image generating method as claimed in one of claims 10 to 15, wherein the original advertisement image (91) is a planar image, the method further comprises the step of generating the selected area image (94) as a depth map image in combination with the planar image to form the final three-dimensional advertisement image.

17. The advertisement image generating method as claimed in one of claims 10 to 16, wherein the original advertisement image (91) comprises a planar image and a depth map image, the method further comprises the step of combining the selected area image (94) and the depth map image, then the planar image to form the final three-dimensional advertisement image.
